# EUROPEAN PATENT APPLICATION

(11) **EP 1 854 603 A1**
(43) Date of publication of application: **14.11.2007**
(21) Application number: 07107940.4
(22) Date of filing: 10.05.2007
(51) Int. Cl.: B27F 1/02, B27M 1/08, B23B 31/26

(54) **Tenoning machine**

(30) Priority: 12.05.2006 IT BO20060360
(71) Applicant: SCM GROUP S.p.A., 47900 Rimini (IT)
(72) Inventor: Pucci, Aureliano, 47900, Rimini (IT)
(74) Representative: Lanzoni, Luciano

(57) **Abstract**

A tenoning machine for machining wooden workpieces (1) which substantially have the shape of a parallelepiped comprises: a unit or carriage (3) for supporting and conveying the workpiece (1) to be machined, adjustable in two axes (X, Y) forming a horizontal plane, and movable along a horizontal direction of feed (X), coinciding with one of the two axes (X, Y), being designed to allow the workpiece to reach a first station (4) for machining or end trimming the workpiece (1), positioned along the direction of feed (X), and having a first machining arbor (6) equipped with a tool (7), and a second station (8) for tenoning the workpiece (1), having a second machining arbor (9), equipped with a tool (10), and positioned downstream of the first station (4) relative to the direction of feed (X); the second machining arbor (9) having a rapid tool (10) changer unit (11) acting between the second machining arbor (9) and the tool (10).

## Description

The present invention relates to a tenoning machine for wooden workpieces which will form rails or stiles of door and window frames.

These tenoning machines have been widely known for some time now and in the most simplified form substantially consist of at least two machining stations distanced from one another and connected by workpiece conveyor units or guides (for example a carriage movable along a supporting guide positioned alongside the machining stations and equipped with workpiece clamping means) forming a horizontal feed line.

These conveyor units, movable at least on two controlled axes (X, Y), carry the workpieces (parts shaped in such a way that they extend mainly longitudinally, that is to say, parallelepipeds) so that they reach, one after another and according to the above-mentioned horizontal conveyor or feed line:
- a trimming station having a first tool (usually a circular saw with a horizontal axis), which can be adjusted on its axes (X, Y) depending on the size of the workpiece, this station being used to perform "end trimming" on the workpiece;
- then the workpiece passes to a second station with a vertical tool adjustably mounted for height in an axis Z, for machining the workpiece transversally, that is to say, for machining on the smaller front sides, an operation simply called tenoning (and also known as counter-profiling).

This second station may also be split into two substations positioned one after the other, each equipped with:
- a vertical shaft adjustable along a vertical axis Z by means of drive means and support on guides;
- a plurality of machining tools mounted along the shaft by means of supporting spacers and having different sizes and shapes so as to allow the tools to be kept on the machine.

Such tenoning machines are extremely reliable, with high productivity and high final quality of the product machined.

However, these machines, partly because of structuring of the stations with technical elements which are expensive (see, for example, the tenoning unit), are intended for medium - high production rates, that is to say, for producers for whom the purchase of such a machine is economically viable.

Therefore, the present invention has for an aim to provide a tenoning machine equipped with all of the stations and basic technical features for machining workpieces, but with lower machine production costs, so as to allow the machine to be accessible even for craft workshop production rates.

Accordingly, the present invention achieves this aim with a tenoning machine, in particular a tenoning machine for machining wooden workpieces comprising the technical features described in one or more of the claims herein.

The technical features of the invention, with reference to the above aims, are clearly described in the claims below and its advantages are more apparent from the detailed description which follows, with reference to the accompanying drawings which illustrate a preferred embodiment of the invention provided merely by way of example without restricting the scope of the inventive concept, and in which:
- Figure 1 is a front perspective view of a tenoning machine for machining wooden workpieces made in accordance with the present invention;
- Figure 2 is a top plan view of the machine of Figure 1;
- Figure 3 is a schematic rear view of the machine of the previous figures with some parts cut away to better illustrate others;
- Figure 4 is a front view of a detail A of Figure 3 with some parts cut away and others in cross-section to better illustrate other details;
- Figure 5 is an alternative embodiment of the detail A illustrated in Figure 4, again a front view with some parts cut away and others in cross-section to better illustrate other details;
- Figure 6 is an enlarged view of a detail from Figure 5.

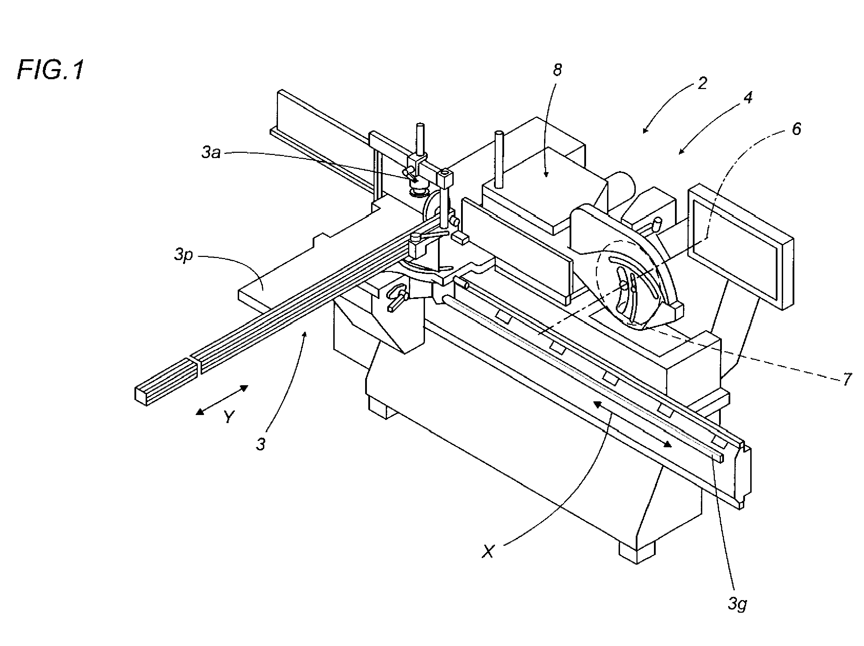

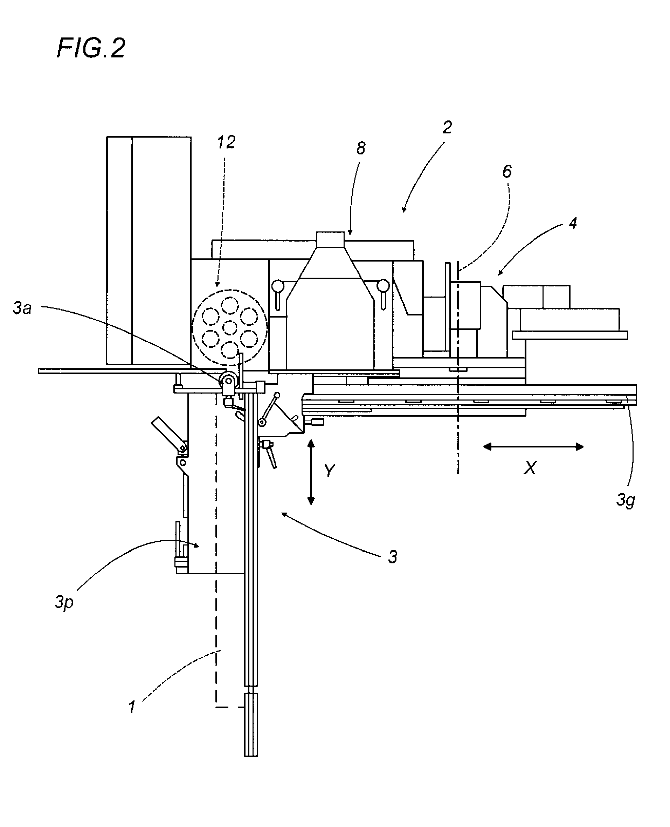

With reference to the accompanying drawings, and in particular with reference to Figures 1 to 3, the tenoning machine in accordance with the invention, labelled 2 as a whole, is used for machining wooden workpieces 1 (illustrated with a dashed line in Figure 2) which usually substantially have the shape of a parallelepiped and which will be used to form the rails or stiles of door and window frames. In terms of the general structure, this tenoning machine 2 comprises at least:
- a unit or carriage 3 for supporting and conveying the workpiece 1 to be machined, manually adjustable in two axes X and Y forming a horizontal plane, and movable along a horizontal direction of feed X, coinciding with one of the two above-mentioned axes, to allow the workpiece to reach:

- a first station 4 for machining or end trimming the workpiece 1, positioned along the direction of feed X, and having a first machining arbor 6 equipped with a tool 7, and
- a second station 8 for tenoning the workpiece 1 having at least a second machining arbor 9, equipped with a tool 10, and positioned downstream of the first station 4 relative to the direction of feed X.

To complete the above description, the carriage 3 supporting the workpiece 1 may slide, in both directions and pushed manually by the operator, along guides 3g and is equipped with a unit 3a for clamping the workpiece 1 on its supporting table 3p.

Therefore, the carriage 3 can feed the workpiece 1 until it arrives at the first station 4, equipped with a tool 7 consisting of a circular saw, for end trimming the workpiece 1, then move further forward to bring the workpiece 1 to the second, tenoning station 8, in which the end of the workpiece 1 is machined according to known parameters to give the end of the workpiece 1 a predetermined profile (of the known type and not described in detail here).

In addition, the second machining arbor 9 has a rapid tool 10 changer unit 11 acting between the second machining arbor 9 and the tool 10.

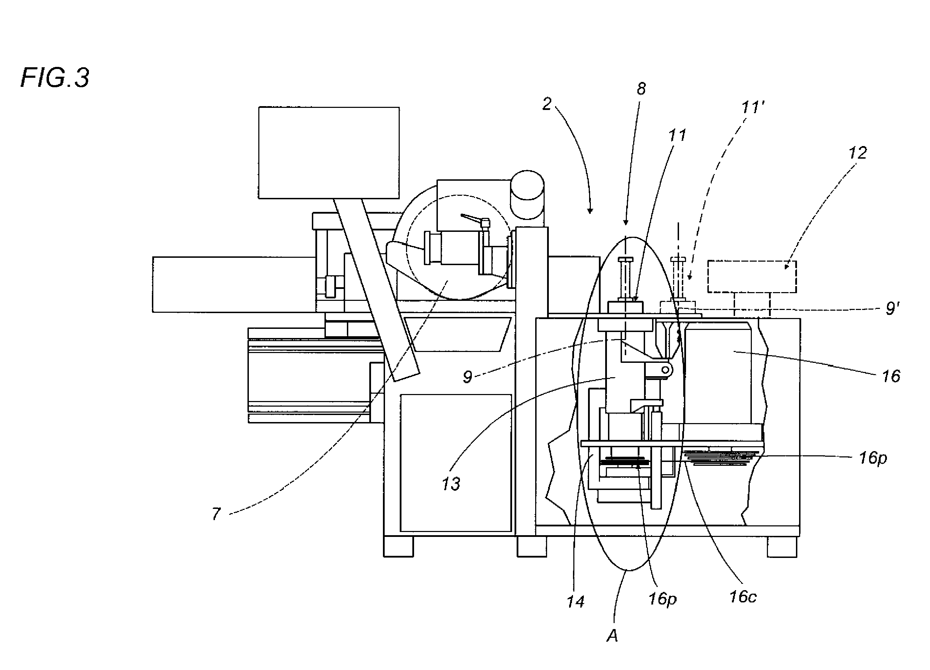

Obviously, in a more complex embodiment (illustrated in Figure 3), where the second station 8 may have two second machining arbors 9 and 9' positioned side by side and equipped with respective tools (the second arbor 9' shown with a dashed line), each machining arbor 9 and 9' has a respective rapid tool changer unit 11 and 11' acting between each second machining arbor 9 and 9' and the tool.

In addition to this, the second machining arbor or arbors 9 may have a tool magazine 12 (of the known type, therefore shown with a dashed line in Figures 2 and 3) positioned close to the second machining arbors 9.

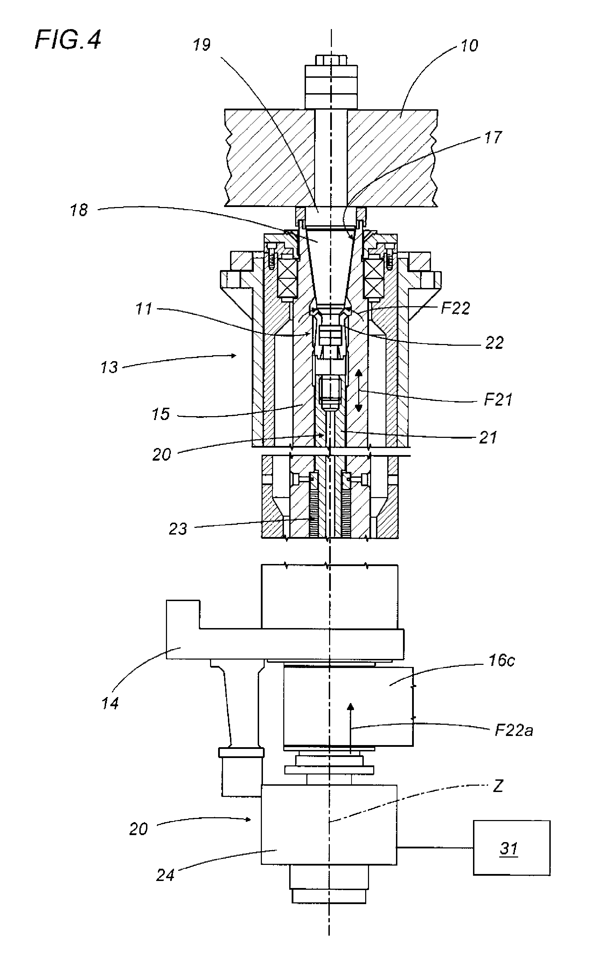

The detail in Figure 4 shows a first construction solution for the rapid tool 10 changer unit 11.

In this solution, the second machining arbor 9 may comprise: a tubular column 13 with a vertical axis Z supported by a machine frame 14 and a hollow shaft 15, forming a spindle body, rotatably supported in the tubular column 13.

The lower end of the hollow shaft 15 is controlled by drive means 16 designed to allow it to rotate about its vertical axis Z. In this case the drive means 16 are positioned alongside the second machining arbor 9 and connected to it by belts 16c and pulleys 16g.

The rapid tool 10 changer unit 11 may comprise:
- the hollow shaft 15 with, at the upper end, a tapered cavity 17 for housing a matching shank 18 of a tool holder shaft 19;
- means 20 for clamping / releasing the shank 18 in the cavity 17 and which, in a clamped configuration (illustrated in Figure 4), allow the hollow shaft 15 and the tool holder shaft 19 to be rotatably coupled and, in a released configuration, allow the tool holder shaft 19 to be removed.

More precisely, the shank 18 clamping / releasing means 20 comprise:
- a rod 21 slidably housed (see arrows F21) in the hollow shaft 15 and equipped, at the upper end, with a collet 22 for gripping the shank 18;
- elastic means 23 (for example a pack of springs) inserted between the hollow shaft 15 and the rod 21, and acting on the rod 21 in such a way as to allow, when required, a traction on the rod 21 designed to move the collet 22 from an open configuration to a closed configuration in which it is coupled on the shank (see arrow F22);
- a control cylinder 24 (of the known type and illustrated with a block), positioned close to the lower end of the hollow shaft 15, and axially connected to the rod 21 so as to allow it to move axially against the thrust of the elastic means 23, to obtain a collet 22 opening movement relative to the shank 18 (see arrow F22a): in this way the shank 18 and the relative tool holder shaft 19 are detached and can be rapidly substituted.

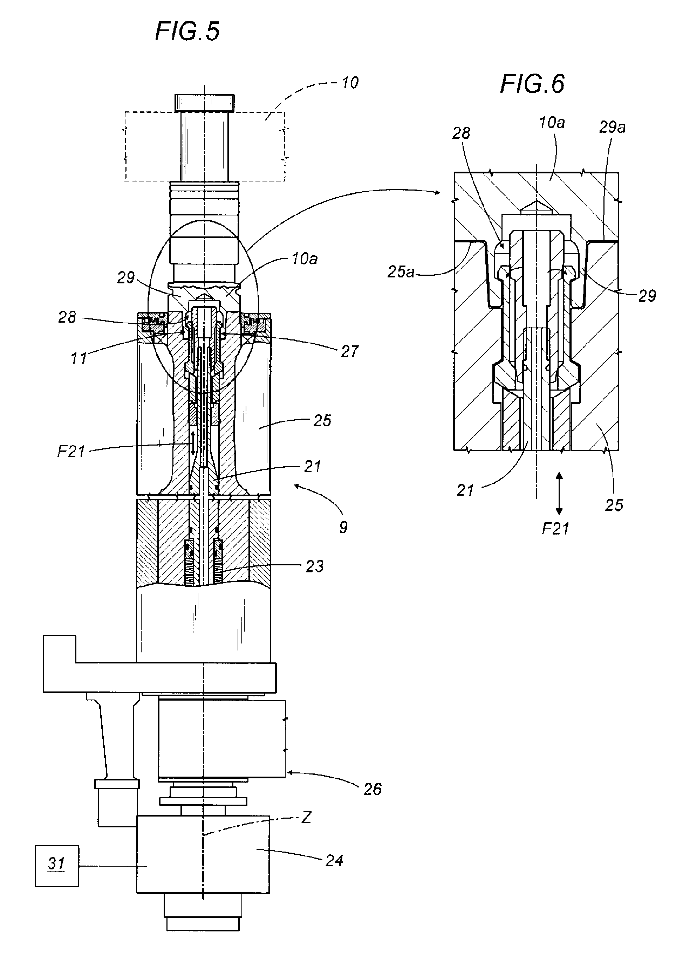

Figures 5 and 6 show an alternative embodiment of the rapid tool changer unit 11.

The second machining arbor 9 may comprise a tubular shaft 25, forming a spindle body, connected, at one end, to rotary motion transmission means 26 (similar to those previously described for the first solution) whilst, its other end may be associated with the tool 10 equipped with a respective supporting shaft 10a.

Therefore, the rapid tool 10 changer unit 11 may comprise means 27 for axial - rotational clamping of the tool 10 on the tubular shaft 25 and, respectively, for tool 10 release from the tubular shaft 25 acting at a cavity 28 in the tubular shaft 25.

This cavity 28 may house a shank 29 present on the tool 10 supporting shaft 10a.

In this solution, as in the previous solution, there is a rod 21 slidably housed (see arrows F21) in the tubular shaft 25, elastic means 23 (for example a pack of springs) inserted between the tubular shaft 25 and the rod 21, and acting on the rod 21 and the control cylinder 24 positioned close to the lower end of the tubular shaft 25, and axially connected to the rod 21 so as to allow it to move axially against the thrust of the elastic means 23.

The difference between the two solutions is the fact that (see also the detail in Figure 6):
- the reciprocal contact surfaces of the shank 29 and the cavity 28 partly extend with a tapered shape relative to the longitudinal axis Z of the tubular shaft 25;
- the tool supporting shaft 10a has a flat ring-shaped outer surface 29a in planar stable contact with a corresponding flat ring-shaped surface 25a, in a clamped configuration, of the tubular shaft 25.

In both of the solutions illustrated the second machining arbor 9 has control and check parts 31 (illustrated with a block in Figures 4 and 5) acting on the clamping, retaining and releasing means 20 and 27 designed to allow the clamped / retained or released positions with the shank 18 or 29 present.

Therefore, a machine structured in this way fulfils the preset aims thanks to a construction architecture of the two operating stations which is simple and rational.

In addition, it is important to consider the presence of the tenoning unit rapid changer unit, designed to allow simplification of the station structure, in particular of the drive and adjusting units, therefore reducing the overall cost of the machine, and the maintenance of a good machine production rate without the need for complex and expensive units.

The invention described above is susceptible of industrial application and may be modified and adapted in several ways without thereby departing from the scope of the inventive concept. Moreover, a11 details of the invention may be substituted by technically equivalent elements.

## Claims

1. A tenoning machine for machining wooden workpieces (1) which substantially have the shape of a parallelepiped; the tenoning machine (2) comprising at least:
- a unit or carriage (3) for supporting and conveying the workpiece (1) to be machined, adjustable in two axes (X, Y) forming a horizontal plane, and movable along a horizontal direction of feed (X), coinciding with one of the two axes (X, Y), being designed to allow the workpiece to reach:
- a first station (4) for machining or end trimming the workpiece (1), positioned along the direction of feed (X), and having a first machining arbor (6) equipped with a tool (7), and
- a second station (8) for tenoning the workpiece (1), having at least one second machining arbor (9), equipped with a tool (10), and positioned downstream of the first station (4) relative to the direction of feed (X), the machine (2) being **characterised in that** said at least one second machining arbor (9) has a rapid tool (10) changer unit (11) acting between said at least one second machining arbor (9) and the tool (10).

2. The tenoning machine according to claim 1, where the second station (8) has at least two second machining arbors (9, 9') positioned side by side and equipped with respective tools (7, 7'), **characterised in that** each machining arbor (9, 9') of the second station (8) has a respective rapid tool (7, 7') changer unit (11, 11') acting between each second machining arbor (9, 9') and the tool (7, 7').

3. The tenoning machine according to claim 1, **characterised in that** the at least one second machining arbor (9) has a tool magazine (12) positioned close to the at least one second machining arbor (9).

4. The tenoning machine according to claim 1, where the second machining arbor (9) comprises at least: a tubular column (13) with a vertical axis (Z) supported by a machine frame (14) and a hollow shaft (15), forming a spindle body, rotatably supported in the tubular column (13); the lower end of the hollow shaft (15) being controlled by drive means (16) designed to allow it to rotate about its vertical axis (Z); **characterised in that** the rapid tool (7) changer unit (11) comprises at least:
- the hollow shaft (15) with, at the upper end, a tapered cavity (17) for housing a matching shank (18) of a tool holder shaft (19);
- means (20) for clamping / releasing the shank (18) in the cavity (17) and which, in a clamped configuration, allow the hollow shaft (15) and the tool holder shaft (19) to be rotatably coupled and, in a released configuration, allow the tool holder shaft (19) to be removed.

5. The tenoning machine according to claim 4, **characterised in that** the shank (18) clamping / releasing means (20) comprise:
- a rod (21) slidably housed in the hollow shaft (15) and equipped, at the upper end, with a collet (22) for gripping the shank (18);
- elastic means (23) inserted between the hollow shaft (15) and the rod (21), and acting on the rod (21) in such a way as to allow, when required, a traction on the rod (21) designed to move the collet (22) from an open configuration to a closed configuration in which it is coupled on the shank;
- a control cylinder (24), positioned close to the lower end of the hollow shaft (15), and axially connected to the rod (21) so as to allow it to move axially against the thrust of the elastic means (23), thus obtaining a collet (22) opening movement relative to the shank (18).

6. The tenoning machine according to claim 1, where the second machining arbor (9) comprises a tubular shaft (25), forming a spindle body, connected, at one end, to rotary motion transmission means (26) whilst its other end may be associated with the tool (10) equipped with a respective supporting shaft (10a), **characterised in that** the rapid tool (10) changer unit (11) comprises means (27) for axial - rotational clamping of the tool (10) on the tubular shaft (25) and, respectively, for tool (10) release from the tubular shaft (25) acting at a cavity (28) in the tubular shaft (25) for housing a shank (29) present on the tool (10) supporting shaft (10a); the contact surfaces of the shank (29) and the cavity (28) at least partly extending with a tapered shape relative to the longitudinal axis (Z) of the tubular shaft (25).

7. The tenoning machine according to claim 6, **characterised in that** the tool supporting shaft (10a) has a flat ring-shaped outer surface (29a) in planar stable contact with a corresponding flat ring-shaped surface (25a), in a clamped configuration, of the tubular shaft (25).

8. The tenoning machine according to any of the foregoing claims, **characterised in that** the second machining arbor (9) has control parts (31) acting on the clamping, retaining and releasing means (20, 27) designed to allow the clamped / retained or released positions with the shank (18, 29) present.
